# EUROPÄISCHE PATENTSCHRIFT

(11) **EP 1 936 034 B1**
(45) Veröffentlichungstag und Bekanntmachung des Hinweises auf die Patenterteilung: **19.08.2015**
(21) Anmeldenummer: 07123179.9
(22) Anmeldetag: 13.12.2007
(51) Int. Cl.: E01C 23/088

(54) **Straßenbaumaschine sowie Verfahren zur Messung der Frästiefe**
Road building machine and method for measuring milling cutter depth
Machine de construction de routes et procédé de mesure de la profondeur de la fraise

(30) Priorität: 22.12.2006 DE 102006062129
(43) Veröffentlichungstag der Anmeldung: 25.06.2008
(60) Teilanmeldung: 13198268.8
(73) Patentinhaber: Wirtgen GmbH, 53578 Windhagen (DE)
(72) Erfinder: Berning, Christian, 53909, Zülpich (DE); Simons, Dieter, 53567, Buchholz (DE)
(74) Vertreter: Von Kreisler Selting Werner - Partnerschaft von Patentanwälten und Rechtsanwälten mbB

(56) Entgegenhaltungen:
- EP-A2- 1 154 075
- EP-A2- 1 860 241
- US-A- 4 041 623
- US-A- 4 139 318
- US-A- 4 140 420

## Beschreibung

Die Erfindung betrifft eine selbstfahrende Straßenbaumaschine, insbesondere eine Kaltfräse, nach dem Oberbegriff des Anspruchs 1, sowie ein Verfahren zur Messung der Frästiefe nach dem Oberbegriff des Anspruchs 26.

Bei derartigen Straßenbaumaschinen wird der Maschinenrahmen von einem Fahrwerk mit Rädern oder Kettenlaufwerken getragen, die über Hubsäulen mit dem Maschinenrahmen verbunden sind, wobei die Hubsäulen es ermöglichen, den Maschinenrahmen in einer Horizontalebene zu halten oder bodenparallel oder mit einer vorbestimmten Längs- und/oder Querneigung.

An dem Maschinenrahmen ist eine Fräswalze zum Bearbeiten einer Boden- oder Verkehrsfläche gelagert.

In der Nähe der Stirnseiten der Fräswalze sind an einer Außenwand der Straßenfräsmaschine höhenverstellbare Seitenschilder als Kantenschutz vorgesehen, die im Betrieb auf der Boden- oder Verkehrsfläche an den seitlichen ungefrästen Kanten der Frässpur aufliegen. In Fahrtrichtung hinter der Fräswalze befindet sich eine höhenverstellbare Abstreifeinrichtung, die im Betrieb in die von der Fräswalze erzeugte Frässpur absenkbar ist, um in der Frässpur verbliebenes Fräsmaterial abzuziehen. Die Straßenfräsmaschine weist des weiteren eine Steuereinrichtung zum Steuern der Frästiefe der Fräswalze auf.

Bei den bekannten Straßenfräsmaschinen besteht das Problem, dass die Steuerung der Frästiefe nicht ausreichend genau ist und dass aus diesem Grund die Frästiefe wiederholt während der Fräsbearbeitung manuell nachgemessen werden muss. Insbesondere in den Fällen, in denen eine harte Verkehrsfläche, z.B. Beton gefräst wird, entsteht ein hoher Verschleiß an den Werkzeugen, so dass die eingestellte Frästiefe durch den abnehmenden Schnittkreisdurchmesser verfälscht wird. So kann der Verschleiß der Werkzeuge beim Fräsen von Beton bereits nach wenigen 100m einen Unterschied im Fräsradius von 15 mm herbeiführen, so dass eine Messung der Verlagerung z.B. von Seitenschildern relativ zum Maschinenrahmen nicht ausreichend genau ist. Ist die Frästiefe nicht ausreichend, muss eine zeitaufwändige Nachbearbeitung der Frässpur erfolgen. Ist die Frässpur zu tief, muss anschließend mehr Baumaterial neu aufgetragen werden, um das gewünschte Boden- oder Verkehrsflächenniveau zu erreichen.

Aus der US 4,140,420 ist eine Straßenbaumaschine bekannt, die mit Messeinrichtungen zum Ausgleich einer Welligkeit der Straßenoberfläche versehen ist. Hierzu ist am vorderen Ende der Maschine ein Wagen angeordnet, der die Straßenoberfläche in unbearbeitetem Zustand abtastet. Der Wagen ist über einen sich fast über die gesamte Länge der Maschine erstreckenden Balken schwenkbar an dem hinteren Kettenlaufwerk gelagert, das seinerseits in der Frässpur läuft.

In der Mitte des Balkens werden die Höhenunterschiede zwischen der Ebene der Frässpur und der unbearbeiteten Straßenoberfläche am vorderen Ende der Maschine detektiert und entsprechend dem Messwert eine Höhensteuerung der Fräswalze vorgenommen. Diese Höhensteuerung der Fräswalze ermöglicht es, durch die ausgleichende Wirkung des Messbalkens die Welligkeit der gefrästen Straßenoberfläche zu reduzieren.

Aus der US 4,041,623 ist eine Straßenfräsmaschine bekannt, bei der die Höhe der Maschine bzw. die Frästiefe über Messarme gemessen wird. Diese Messarme sind in Kontakt mit einer Messschnur, die entlang der zu fräsenden Straße bzw. Fläche aufgestellt werden.

Aus der US 4,139,318 sind eine Straßenfräsmaschine mit den Merkmalen des Oberbegriffs des Anspruchs 1, und ein Verfahren mit den Merkmalen des Oberbegriffs des Anspruchs 26 bekannt.

Der Erfindung liegt daher die Aufgabe zugrunde, die Genauigkeit der Frästiefenmessung während des Betriebs einer Straßenfräsmaschine zu verbessern und dadurch die Abweichungen von einer vorgegebenen Frästiefe zu minimieren.

Zur Lösung dieser Aufgabe dienen die Merkmale des Anspruchs 1 bzw. 26.

Die Erfindung sieht in vorteilhafter Weise vor, dass mindestens eine Messeinrichtung die aufgrund der aktuellen Frästiefe erfolgte Anhebung einer auf der Boden- oder Verkehrsfläche aufliegenden ersten Tasteinrichtung und die Absenkung einer aus einer Abstreifeinrichtung bestehenden zweiten Tasteinrichtung auf den Grund der Frässpur erfasst.

Die Verwendung der Abstreifeinrichtung als Abtasteinrichtung hat den Vorteil, dass keine Messfehler durch Unebenheiten der Frässpur entstehen. Ein weiterer Vorteil besteht darin, dass die Abstreifeinrichtung an ihrer Unterkante gegen Verschleiß geschützt ist.

Alternativ kann die Steuerung aus den Messwerten der mindestens einen Messeinrichtung die aktuelle Frästiefe der Fräswalze in Höhe der Fräswalzenachse ermitteln. Die erfolgt vorzugsweise mit Hilfe einer Berechnung, die auch eine Schräglage des Maschinenrahmens berücksichtigen kann.

Die Messeinrichtungen bestehen vorzugsweise aus Wegmesseinrichtungen. In einem Ausführungsbeispiel ist vorgesehen, dass die erste Tasteinrichtung aus mindestens einem der beidseitig an den Stirnseiten der Fräswalze relativ zu dem Maschinenrahmen höhenverstellbaren und schwenkbar angeordneten Seitenschilddern besteht. Die Seitenschilder liegen auf der Boden- oder Verkehrsfläche auf oder werden gegen diese angepresst, so dass deren Lageveränderung relativ zu dem Maschinenrahmen während des Betriebs eine genaue Frästiefenerfassung ermöglichen, wenn zusätzlich eine Messung der Lageveränderung einer zweiten Tasteinrichtung in der Frässpur relativ zu dem Maschinenrahmen erfolgt.

Auch bei Seitenschildern besteht der Vorteil, dass diese an ihren Unterkanten verschleißgeschützt sind.

Dabei können die Messeinrichtungen mit den Seitenschildern und/oder der Abstreifeinrichtung gekoppelte Seilzüge und zugeordnete Seilzugsensoren als Wegmesseinrichtungen aufweisen, die die Veränderung der Lage der Seitenschilder und der Abstreifeinrichtung relativ zu dem Maschinenrahmen messen oder die relative Verlagerung mindestens eines der Seitenschilder in Relation zu der Abstreifeinrichtung oder der zweiten Tasteinrichtung.

Bevorzugt ist die Anordnung der mit den Seitenschildern und der Abstreifeinrichtung gekoppelten Seilzüge in einer in etwa in Höhe der Abstreifeinrichtung verlaufenden im Wesentlichen vertikalen Ebene quer zur Frässpur.

Damit kann vermieden werden, dass aufgrund einer unterschiedlichen Bezugsebene der Messung an den Seitenschildern im Verhältnis zu der Messung an dem Abstreifschild ein Messfehler entsteht.

Hierzu kann vorgesehen sein, dass ein Seilzug einerseits mit der Abstreifeinrichtung und andererseits mit mindestens einem der Seitenschilder über eine Umlenkrolle gekoppelt ist, derart, dass ein Seilzugsensor unmittelbar die Frästiefe, z.B. an der Umlenkrolle, misst.

Bei einer weiteren Alternative kann vorgesehen sein, dass die Abstreifeinrichtung an der den Seitenschildern zugewandten Seitenkanten jeweils eine Messeinrichtung aufweist, die die relative Verlagerung der Abstreifeinrichtung zu dem wenigstens einen benachbarten Seitenschild oder die relative Verlagerung mindestens eines Seitenschildes zu der Abstreifeinrichtung misst.

Nach einer weiteren alternativen Ausführungsform kann die Abstreifeinrichtung mindestens einen höhenverstellbaren, in der Abstreifeinrichtung vertikal und linear geführten quer zur Fahrtrichtung verlaufenden Balken als erste Tasteinrichtung aufweisen, der neben der Frässpur auf der Boden- oder Verkehrfläche aufliegt und dessen Position relativ zu der Abstreifeinrichtung, vorzugsweise hinsichtlich Höhe und/oder Neigung, von der Messeinrichtung messbar ist.

Die Seitenschilder können aufgrund der Schwerkraft auf den Kanten der Boden- oder Verkehrfläche neben der von der Fräsmaschine gefrästen Frässpur aufliegen, oder alternativ durch hydraulische Einrichtungen auf die Kanten angedrückt werden.

Auch die Abstreifeinrichtung kann mit Hilfe hydraulischer Einrichtungen auf die Oberfläche der Frässpur angedrückt werden.

Die hydraulischen Einrichtungen zum Andrücken der Seitenschilder auf die Boden- oder Verkehrsfläche bzw. zum Andrücken der Abstreifeinrichtung auf dem Boden der Frässpur können integrierte Wegmesssysteme aufweisen.

Zum Abheben oder Absenken der Seitenschilder und/oder der Abstreifeinrichtung können mehrere vorzugsweise jeweils zwei Kolbenzylindereinheiten mit integrierten Wegmesssystemen vorgesehen sein, aus deren Wegmesssignalen die Steue-rung die aktuelle Frästiefe aus der relativen Differenz der Positionen der Abstreifeinrichtung und der ersten Tasteinrichtung berechnet.

Die Steuerung, die die Wegmesssignale der Messeinrichtung erhält, kann den Hubzustand der in Fahrtrichtung hinteren Hubsäulen automatisch zur Herstellung der Parallelität des Maschinenrahmens zu der Boden- oder Verkehrfläche einer gewünschten Frästiefe regeln.

Die auf der Verkehrsfläche schwenkbar gegenüber dem Maschinenrahmen aufliegenden Seitenschilder können in Fahrtrichtung mit Abstand voneinander angeordnete Messeinrichtungen aufweisen, wobei die Steuerung aus der Differenz der Messsignale der Seitenschilder und der Abstreifeinrichtung die Längsneigung und/oder Querneigung des Maschinenrahmens zu der Boden- oder Verkehrsfläche messen kann.

Die vorderen und/oder hinteren Hubsäulen können ein Wegmesssystem zum Erfassen des Hubzustandes aufweisen. Die Steuerung, die die Wegmesssignale der Messeinrichtung erhält, kann den Zustand aller Hubsäulen derart regeln, dass der Maschinenrahmen eine vorbestimmte Neigung oder einen vorbestimmten wegstreckenabhängigen Querneigungsverlauf quer zur Fahrtrichtung aufweist.

Vorzugsweise wird der aktuelle Sollwert für die Frästiefe der Fräswalze mit Hilfe der vorderen Hubsäulen eingestellt.

Im Folgenden werden unter Bezugnahme auf die Zeichnungen Ausführungsbeispiele der Erfindung näher erläutert. Es zeigen:
- Fig. 1: eine Kaltfräse,
- Fig. 2: eine an dem Abstreifschild befestigte erste Tasteinrichtung,
- Fig. 3: zwei Kolbenzylindereinheiten zum Anheben oder Absenken des Abstreifschildes einer Abstreifeinrichtung,
- Fig. 4: eine optische Vorrichtung zur Messung der Wegdifferenz zwischen den Seitenschildern und der Abstreifeinrichtung,
- Fig. 5: eine Seilzugmesseinrichtung zwischen den Seitenschildern und der Abstreifeinrichtung,
- Fig. 6: ein bevorzugtes Ausführungsbeispiel, und
- Fig. 7 a,b,c: eine schematische Darstellung des an dem Abstreifschild der Abstreifeinrichtung entstehenden Messfehlers bei fehlender Parallelität des Maschinenrahmens mit der Boden- und Verkehrsfläche.

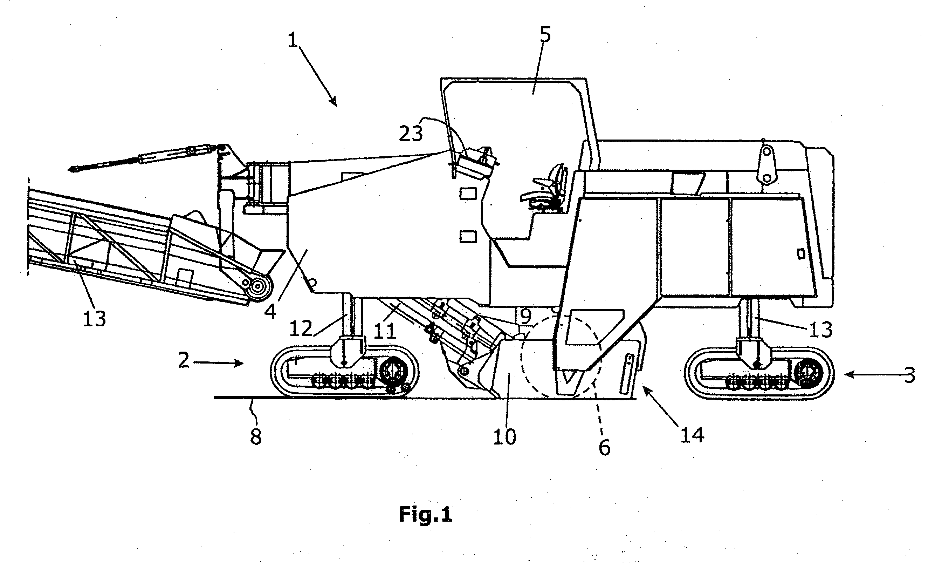

Die in Fig. 1 dargestellte Straßenfräsmaschine weist einen Maschinenrahmen 4 auf, der von einem Fahrwerk mit zwei vorderen Kettenlaufwerken 2 und mindestens einem hinteren Kettenlaufwerk 3 getragen wird. Die Kettenlaufwerke 2, 3 sind über Hubsäulen 12, 13 mit dem Maschinenrahmen 4 verbunden. Es versteht sich, dass anstelle der Kettenlaufwerke 2, 3 auch Räder verwendet werden können.

Mit Hilfe der Hubsäulen 12, 13 kann der Maschinenrahmen 4 angehoben oder abgesenkt oder in eine vorgegebene Schräglage relativ zu der zu bearbeitenden Boden- oder Verkehrsfläche 8 gebracht werden. Die in dem Maschinenrahmen 4 gelagerte Fräswalze 6 ist von einem Walzenkasten 9 umgeben, der in Fahrtrichtung vorne zu einem ersten Transportband 11, offen ist, der das gefräste Material im vorderen Bereich des Maschinenrahmens 4 auf eine zweite Transporteinrichtung 13 überträgt. Die zweite Transporteinrichtung 13, mit der das abgefräste Material zum Beispiel auf einen Lastkraftwagen abwerfbar ist, ist in Fig. 1 wegen ihrer Länge nicht vollständig dargestellt. Hinter der Fräswalze 6 ist eine höhenverstellbare Abstreifeinrichtung 14 angeordnet, die im Betrieb mit einem Abstreifschild 15 in die von der Fräswalze 6 erzeugte Frässpur 17 eingreift und den Grund der Frässpur 17 abzieht, so dass sich hinter dem Abstreifschild kein abgefrästes Material mehr in der Frässpur 17 befindet.

Oberhalb der Fräswalze 6 ist ein Fahrstand 5 mit einem Bedienpult für den Fahrzeugführer für alle Steuerfunktionen des Fahr- und des Fräsbetriebes angeordnet. Darin enthalten ist auch eine Steuereinrichtung 23 zum Steuern der Frästiefe der Fräswalze 6.

Die beidseitig in Nähe der Stirnseite der Fräswalze 6 angeordneten Seitenschilder 10 und die Abstreifeinrichtung 14 sind mit Messeinrichtungen 16 versehen, die die Bestimmung der aktuellen Frästiefe in Höhe der Abstreifeinrichtung 14 bzw. die Berechnung der Frästiefe in Höhe der Drehachse der Fräswalze ermöglichen. Dabei wird die Frästiefe in einer zur Boden- oder Verkehrsfläche orthogonalen Ebene bestimmt, die parallel zur Drehachse der Fräswalze verläuft und in der die Drehachse liegt.

Dabei kann die Position einer ersten Tasteinrichtung, z.B. die Seitenschilder 10, auf der Boden- oder Verkehrsfläche 8 und/oder die Absenkung einer zweiten Tasteinrichtung, z.B. der Abstreifeinrichtung erfasst werden. Vorzugsweise aus Wegmesseinrichtungen bestehenden Messeinrichtungen 16 messen die Verlagerungen der Tasteinrichtungen z.B. der Seitenschilder 10 oder eines Balkens 20 oder des Abstreifschildes 15 in Relation zu dem Maschinenrahmen 4 oder relativ zueinander.

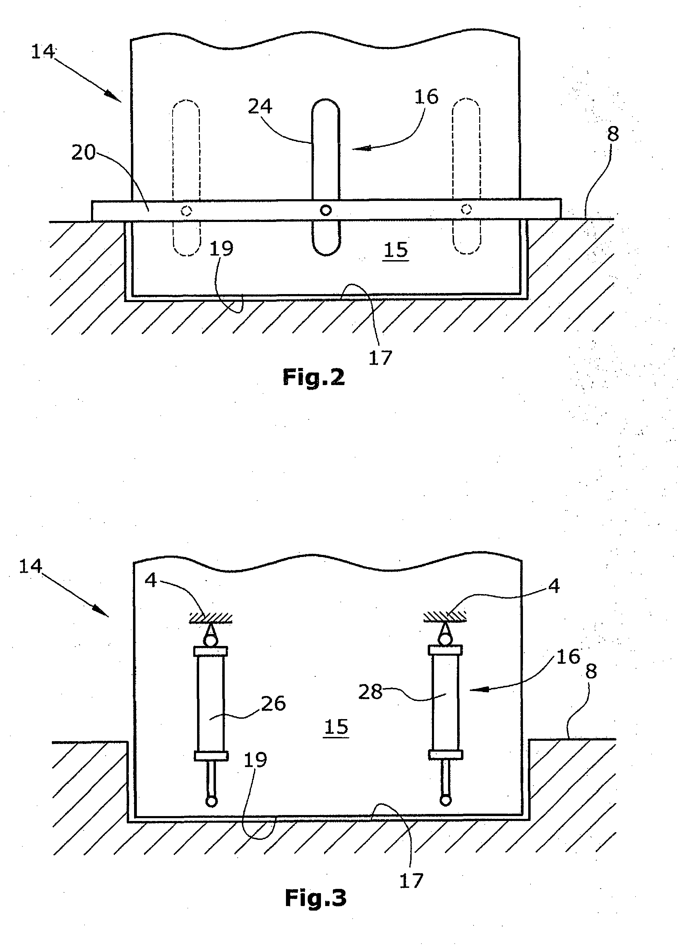

Das Ausführungsbeispiel der Fig. 2 zeigt einen Balken 20 als Tasteinrichtung, der auf der Boden- oder Verkehrsfläche 8 aufliegt und der dem Abstreifschild 15 der Abstreifeinrichtung in einem linear und orthogonal zu der Unterkante 19 des Abstreifschildes 15 verlaufenden Schlitz 24 geführt ist. Es versteht sich, dass auch zwei zueinander parallele Schlitze 24 in dem Abstreifschild 15 vorgesehen sein können, oder dass der Balken 20 als Tasteinrichtung in anderer Weise an der Abstreifeinrichtung 14 höhenverstellbar geführt sein kann. Die Messeinrichtung 16 in Form einer Wegmesseinrichtung erfasst die Verschiebung des Balkens 20 in Relation zu der Abstreifeinrichtung 14. Im Falle von zwei mit horizontalem Abstand voneinander verlaufenden Schlitzen 24 besteht die Möglichkeit, sowohl die Frästiefe auf der linken Seite der Frässpur 17 als auch auf der rechten Seite der Frässpur 17 separat zu erfassen. Außerdem besteht dadurch die Möglichkeit, eine Schräglage des Maschinenrahmens 4 in Relation zu der Boden- oder Verkehrsfläche 8 festzustellen.

Fig. 3 zeigt ein weiteres Ausführungsbeispiel, bei dem das Abstreifschild 15 der Abstreifeinrichtung 14 mit Hilfe von hydraulischen Einrichtungen auf- und abbewegbar ist. Die hydraulischen Einrichtungen bestehen aus Kolbenzylindereinheiten 26, 28 mit integriertem Wegmesssystem. Dies bedeutet, dass die Kolbenzylindereinheiten 26, 28 nicht nur die Hubbewegung der Abstreifeinrichtung ermöglichen, sondern darüber hinaus auch ein Wegsignal erzeugen.

Wie aus Fig. 3 ersichtlich ist, sind die Kolbenzylindereinheiten 26, 28 an einem Ende mit dem Maschinenrahmen 4 gekoppelt und an dem anderen Ende mit dem Abstreifschild 15.

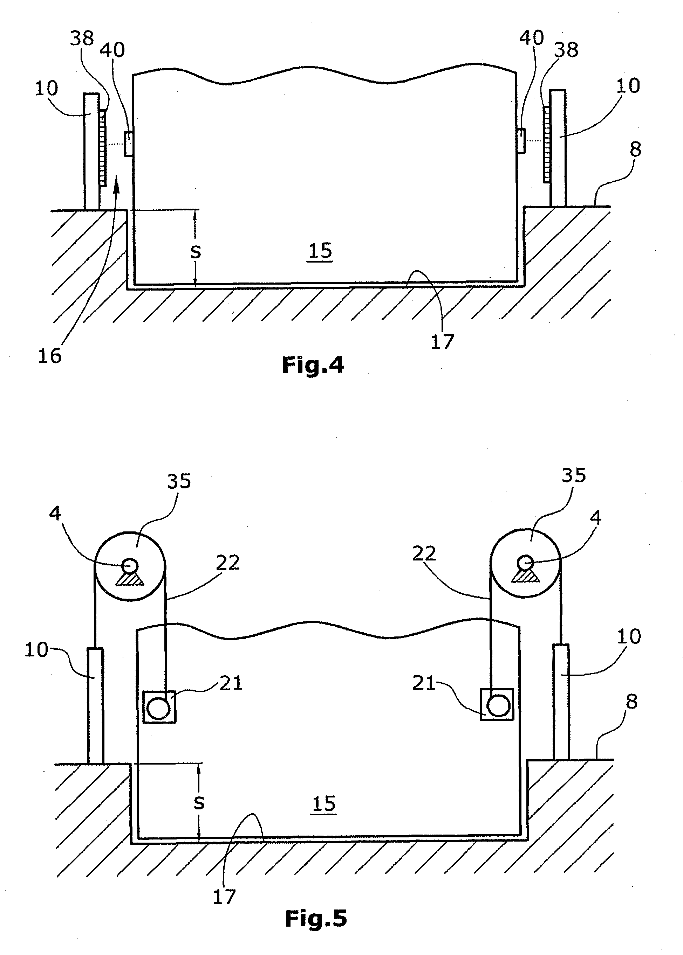

Fig. 4 zeigt ein Ausführungsbeispiel, bei dem die Relativbewegung zwischen den Seitenschildern 10 und dem Abstreifschild 15 unmittelbar gemessen wird, um die Frästiefe der Frässpur 17 zu erfassen. Hierzu sind beispielsweise an den Seitenschildern 10 und jeweils gegenüberliegend an dem Abstreifschild 15 Elemente 38,40 der Messeinrichtung 16 angeordnet, die die Erfassung der relativen Verlagerung des Abstreifschildes 15 in Relation zu den Seitenschildern 10 ermöglichen. Diese Verlagerung entspricht der Frästiefe s in Fig. 4. Beispielsweise kann eine derartige Messeinrichtung, die die relative Verlagerung misst, aus einem optischen System, z.B. durch Ablesen einer Skalierung mit einem optischen Sensor, oder einem elektromagnetischen oder induktivem System bestehen.

Alternativ kann wie in Fig. 5 gezeigt das relative Wegmesssystem zwischen den Seitenschildern 10 und dem Abstreifschild 15 auch aus einem Seilzug 22 in Kombination mit einem Seilzugsensor 21 bestehen. Der Seilzug 22 ist einerseits mit dem Abstreifschild 15 der Abstreifeinrichtung 14 und andererseits mit mindestens einem der Seitenschilder 10 über eine Umlenkrolle 35 gekoppelt, so dass das Signal des Seilzugsensors 21 unmittelbar den aktuellen Frästiefenwert anzeigen kann.

Die Seitenschilder 10 können selbst als erste Tasteinrichtung verwendet werden, indem ihre Lage mit Hilfe von einem Seilzug und einem Seilzugsensor oder mit Hilfe von Kolbenzylindereinheiten 30, 32 mit integrierten Wegmesseinrichtungen in Relation zu dem Maschinenrahmen 4 oder der zweiten Tasteinrichtung überwacht wird.

Beispielsweise können die Messeinrichtungen auch die Verlagerung der Seitenschilder 10 in Relation zu dem Maschinenrahmen 4 messen. Im Falle von zwei Messeinrichtungen in Fahrtrichtung vorne und hinten der Seitenschilder 10 besteht auch die Möglichkeit die Längsneigung des Maschinenrahmens 4 in Relation zur Boden- oder Verkehrsfläche 8 oder durch einen Vergleich der Messwerte beider Seitenschilder 10 auf beiden Seiten der Fräswalze 6 auch die Querneigung des Maschinenrahmens 4 zu ermitteln.

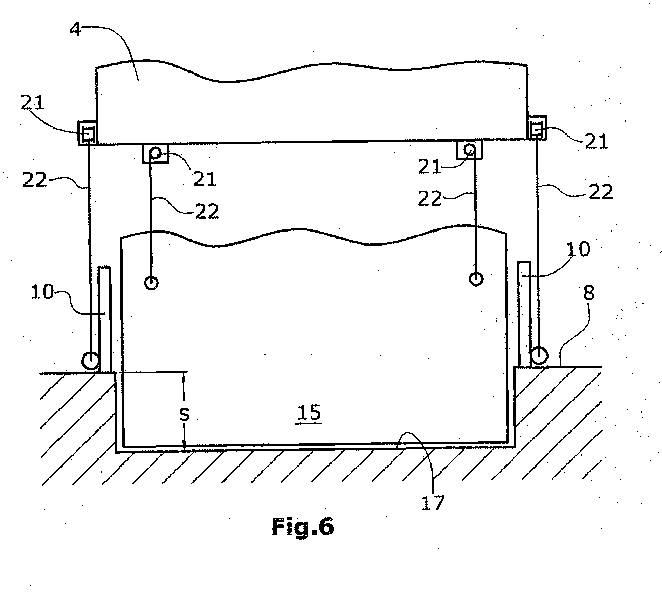

Fig. 6 zeigte eine bevorzugte Ausführungsform, bei der an beiden Seiten der Abstreifeinrichtung 15 Seilzüge 22 mit am Maschinenrahmen 4 befestigten Seilzugsensoren 21 angeordnet sind. Die Seitenschilder 10 sind ebenfalls mit Seilzügen 22 und an dem Maschinenrahmen 4 befestigten Seilzugsensoren 21 versehen, und zwar beiderseits der Maschine. Die Frästiefe s wird aus der Differenz der Messwerte der Seilzugsensoren 21 für die Seitenschilder 10 und der Sellzugsensoren 21 der Abstreifeinrichtung 15 ermittelt. Dabei soll die Messung vorzugsweise in der gleichen im wesentlichen vertikalen Ebene erfolgen, um Messfehler zu vermeiden.

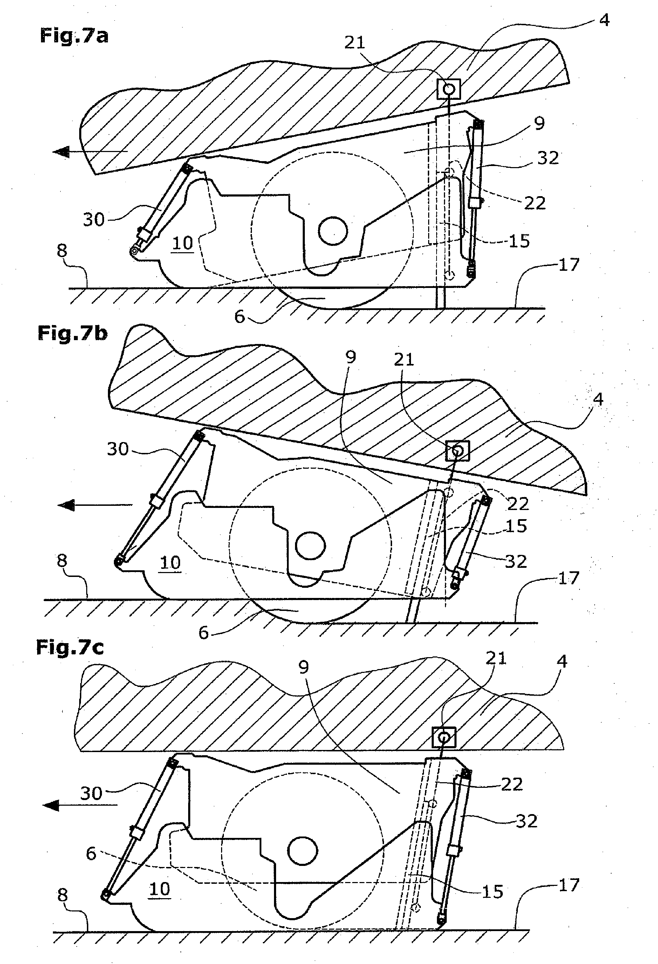

In Fign. 7a bis 7c sind die Seilzugsensoren 21 für die Seitenschilder 10 und die Abstreifischilder 14 dargestellt, wobei in den Zeichnungen nur ein Seilzugsensor 21 angedeutet ist, weil die Sellzugsensoren im wesentlichen in der gleichen Ebene hintereinander liegen.

Fig. 7a, b, c sollen den Fall verdeutlichen, bei dem die Boden- oder Verkehrsfläche 8 nicht parallel zum Maschinenrahmen 4 verläuft, wobei eine Korrektur des von den Messeinrichtungen angezeigten Frästiefenmesswertes aufgrund eines Winkelfehlers erfolgen muss, da durch eine Längsneigung des Maschinenrahmens 4 das Messsignal in Höhe des Abstreifschildes 15 oder einer zweiten Tasteinrichtung in der Nähe der Abstreifeinrichtung 15 verfälscht wird. Aufgrund der feststehenden geometrischen Verhältnisse, nämlich dem Abstand des Abstreifschildes 15 von der Drehachse der Fräswalze 6 lässt sich bei Kenntnis der Winkelabweichung zu der Horizontalen in Fahrtrichtung der gemessene Frästiefenwert korrigieren und die aktuelle Frästiefe in Höhe der Fräswalzenachse berechnen. Die Winkelabweichung in Fahrtrichtung lässt sich beispielsweise aus der Stellung der Hubsäulen 12,13 der Kettenlaufwerke 2,3 oder der Kolbenzylinder-Einheiten 30, 32 bestimmen.

Aus den Figuren 7a bis 7c ist auch ersichtlich, in welchem Umfang die Seitenschilder 10 relativ zum Maschinenrahmen 4 schwenkbar sind. Da die Kolbenzylindereinheiten 30, 32 auch mit Wegmesssystemen versehen sind, können diese Messsignale zur Bestimmung des Abstandes der Seitenschilder 10 von dem Maschinenrahmen 4 alternativ zu Seilzugsensoren 21 verwendet werden.

Figur 7c zeigt die Position des mindestens einen Seitenschildes 10 bei bodenparalleler Position des Maschinenrahmens 4. Das in den Figuren 7a bis 7c gezeigte Abstreifschild 15 befindet sich an dem Walzenkasten 9, so dass der Abstand des Abstreifschildes 15 von der Drehachse der Fräswalze 6 eindeutig bestimmbar ist, um eine Berechnung der Frästiefenkorrektur zu ermöglichen, wenn der Maschinenrahmen 4 nicht bodenparallel ist.

Die Steuerung 23 kann aus den erhaltenen Wegmesssignalen die aktuelle Frästiefe in Höhe der Fräswalzenachse berechnen und gegebenenfalls auch ein Steuersignal für die Höhenverstellung der Fräswalze 6 erzeugen.

Vorzugsweise kann die Steuerung 23 den Hubzustand der in Fahrtrichtung hinteren, mindestens einen Hubsäule 13 automatisch zur Herstellung der Parallelität des Maschinenrahmens 4 zu der Boden- oder Verkehrsfläche 8 oder zur Horizontalen oder zu einer vorgegebenen gewünschten Fräsebene regeln.

## Patentansprüche

1. Selbstfahrende Straßenbaumaschine (1), insbesondere Kaltfräse, mit
- einem Fahrwerk, das den Maschinenrahmen (4) über Hubsäulen (12,13) trägt
- einer an dem Maschinenrahmen (4) gelagerten Fräswalze (6) zum Bearbeiten einer Boden- oder Verkehrsfläche (8),
- höhenverstellbaren Seitenschildern (10) als Kantenschutz, die auf der zu bearbeitenden Boden- oder Verkehrsfläche (8) aufliegen,
- einer höhenverstellbaren Abstreifeinrichtung (14), die in Fahrtrichtung hinter der Fräswalze (6) angeordnet ist und im Betrieb in die von der Fräswalze (6) erzeugte Frässpur (17) absenkbar ist,
- mindestens einer Messeinrichtung (16), die die aufgrund der aktuellen Frästiefe erfolgte Anhebung einer auf der zu bearbeitenden Boden- oder Verkehrsfläche (8) aufliegenden ersten Testeinrichtung erfasst, und
- einer Steuereinrichtung (23) zum Steuern der Frästiefe der Fräswalze (6),
**dadurch gekennzeichnet, dass**
die Messeinrichtung (16) die Absenkung einer zweiten aus der Abstreifeinrichtung (14) bestehenden Tasteinrichtung auf die Oberfläche der Frässpur (17) erfasst, wobei die Steuerung (23) aus beiden Messwerten der Tasteinrichtungen relativ zum Maschinenrahmen (4) oder relativ zueinander die aktuelle genaue Frästiefe der Fräswalze (6) ermittelt.

2. Straßenbaumaschine nach Anspruch 1, **dadurch gekennzeichnet, dass** die Steuerung (23) aus den Messwerten der mindestens einen Messeinrichtung (16) die Frästiefe der Fräswalze (6) in Höhe der zweiten Tasteinrichtung ermittelt.

3. Straßenbaumaschine nach Anspruch 1, **dadurch gekennzeichnet, dass** die Steuerung (23) aus den Messwerten der mindestens einen Messeinrichtung (16) die aktuelle Frästiefe der Fräswalze (6) in Höhe der Fräswalzenachse berechnet.

4. Straßenbaumaschine nach Anspruch 1 bis 3, **dadurch gekennzeichnet, dass** die Messeinrichtungen (16) aus Wegmesseinrichtungen bestehen.

5. Straßenbaumaschine nach Anspruch 1 bis 4, **dadurch gekennzeichnet, dass** die erste Tasteinrichtung aus mindestens einem der beidseitig an den Stirnseiten der Fräswalze (6) relativ zu dem Maschinenrahmen (4) höhenverstellbar und schwenkbar angeordneten Seitenschilder (10) besteht.

6. Straßenbaumaschine nach Anspruch 1 bis 5, **dadurch gekennzeichnet, dass** die Messeinrichtungen (16) mit der ersten Tasteinrichtung und/oder der zweiten Tasteinrichtung gekoppelte Seilzüge (22) und Seilzugsensoren (21) als Wegmesseinrichtungen aufweisen.

7. Straßenbaumaschine nach Anspruch 1 bis 6, **dadurch gekennzeichnet, dass** die Messeinrichtungen (16) die Verlagerung der ersten Tasteinrichtung relativ zu der zweiten Tasteinrichtung erfassen oder jeweils die Verlagerung der ersten und der zweiten Tasteinrichtung relativ zu dem Maschinenrahmen (4).

8. Straßenbaumaschine nach Anspruch 6 oder 7, **dadurch gekennzeichnet, dass** ein Seilzug (22) einerseits mit der Abstreifeinrichtung (14) und andererseits mit mindestens einem der Seitenschilder (10) über eine Umlenkrolle (35) gekoppelt ist, derart dass ein Seilzugsensor (21) unmittelbar die Frästiefe misst.

9. Straßenbaumaschine nach Anspruch 5 bis 8, **dadurch gekennzeichnet, dass** die Abstreifeinrichtung (14) an den den Seitenschildern (10) zugewandten Seitenkanten jeweils eine Messeinrichtung (16) aufweist, die die relative Verlagerung der Abstreifeinrichtung (14) zu dem mindestens einen Seitenschild (10) misst.

10. Straßenbaumaschine nach einem der Ansprüche 1 oder 2, **dadurch gekennzeichnet, dass** die Abstreifeinrichtung (14) mindestens einen höhenverstellbaren, in der Abstreifeinrichtung (14) orthogonal zu der Unterkante der Abstreifeinrichtung (14) linear geführten, quer zur Fahrtrichtung verlaufenden Balken (20) als erste Tasteinrichtung aufweist, der neben der Frässpur (17) auf der Boden- oder Verkehrsfläche (8) aufliegt und dessen Position relativ zu der Abstreifeinrichtung (14), vorzugsweise hinsichtlich Höhe und Neigung, von der Messeinrichtung (16) messbar ist.

11. Straßenbaumaschine nach einem der Ansprüche 5 bis 10, **dadurch gekennzeichnet, dass** die Seitenschilder (10) aufgrund der Schwerkraft auf den Kanten neben der von der Fräswalze (6) gefrästen Frässpur aufliegen.

12. Straßenbaumaschine nach einem der Ansprüche 5 bis 11, **dadurch gekennzeichnet, dass** hydraulische Einrichtungen die Seitenschilder (10) auf die Kanten neben der von der Fräswalze (6) gefrästen Frässpur (9) und /oder die Abstreifeinrichtung (14) auf den Boden der Frässpur (9) andrücken.

13. Straßenbaumaschine nach Anspruch 12, **dadurch gekennzeichnet, dass** die hydraulischen Einrichtungen aus Kolben-Zylindereinheiten (26,28) mit integriertem Wegmesssystem bestehen.

14. Straßenbaumaschine nach einem der Ansprüche 5 bis 13, **dadurch gekennzeichnet, dass** zum Anheben oder Absenken der Seitenschilder (10) und/oder der Abstreifeinrichtung (14) mehrere, vorzugsweise jeweils zwei, Kolben-Zylindereinheiten (26,28,30,32) mit integrierten Wegmesssystemen vorgesehen sind, aus deren Wegmesssignalen in Relation zu dem Maschinenrahmen (4) die Steuerung (23) die aktuelle Frästiefe berechnet.

15. Straßenbaumaschine nach einem der Ansprüche 1 bis 14, **dadurch gekennzeichnet, dass** die Steuerung (23), die die Wegmesssignale der Messeinrichtungen (16) erhält, den Hubzustand der in Fahrtrichtung hinteren Hubsäulen (13) automatisch zur Herstellung der Parallelität des Maschinenrahmens (4) zu der Boden- oder Verkehrsfläche (8) oder zu einer vorgegebenen Fräsebene regelt.

16. Straßenbaumaschine nach Anspruch 15, **dadurch gekennzeichnet, dass** die auf der Boden- oder Verkehrsfläche (8) schwenkbar gegenüber dem Maschinenrahmen (4) aufliegenden Seitenschilder (10) zwei in Fahrtrichtung mit Abstand voneinander angeordnete Messeinrichtungen (16a,16b) aufweisen und dass die Steuerung (23) aus der Differenz der Messsignale der Seitenschilder (10) die Längsneigung und/oder Querneigung des Maschinenrahmen (4) zu der Boden- oder Verkehrsfläche (8) misst.

17. Straßenbaumaschine nach Anspruch 1 bis 16, **dadurch gekennzeichnet, dass** die vorderen und/oder hinteren Hubsäulen (12,13) ein Wegmesssystem zum Erfassen des Hubzustandes aufweisen.

18. Straßenbaumaschine nach einem der Ansprüche 1 bis 17, **dadurch gekennzeichnet, dass** die Steuerung (23), die die Wegmesssignale der Messeinrichtungen (16) erhält, den Hubzustand aller Hubsäulen (12, 13) derart regelt, dass der Maschinenrahmen (4) eine vorbestimmte Querneigung oder einen vorbestimmten wegstreckenabhängigen Querneigungsverlauf quer zur Fahrtrichtung aufweist.

19. Straßenbaumaschine nach Anspruch 17 oder 18, **dadurch gekennzeichnet, dass** der aktuelle Sollwert für die Frästiefe der Fräswalze (6) mit Hilfe der vorderen Hubsäulen (12) einstellbar ist.

20. Straßenbaumaschine nach einem der Ansprüche 1 bis 19, **dadurch gekennzeichnet, dass** die Steuerung (23), die die Messsignale aller Messeinrichtungen (18) der Seitenschilder (10) und/oder Abstreifeinrichtungen (14), sowie aller Hubsäulen (12,13) erhält, in Abhängigkeit von den Wegmesssignalen der Messeinrichtungen (16) und/oder von der gewünschten ortsabhängigen Veränderung eines Sollwertes für die Frästiefe im Verlauf der bearbeiteten Wegstrecke die sich daraus ergebende Hubposition der Hubsäulen (12,13) einstellt.

21. Straßenbaumaschine nach einem der Ansprüche 1 bis 20, **dadurch gekennzeichnet, dass** das Nullniveau der Messsignale der Messeinrichtungen (16) auf der ungefrästen Boden- oder Verkehrsfläche (8) einstellbar ist.

22. Straßenbaumaschine nach einem der Ansprüche 1 bis 21, **dadurch gekennzeichnet, dass** jede Hubsäule (12,13) an dem unteren Ende einen Träger (11) für ein Rad oder ein Kettenlaufwerk aufweist, und dass ein Abstandssensor (30) den Abstand des Trägers (11) zur Boden- und Verkehrsfläche (24) misst und ein Messsignal an eine Steuerung (23) für die Hubposition der Hubsäulen (14) und/oder an eine Steuerung (23) für die Frästiefe der Fräswalze (6) sendet.

23. Straßenbaumaschine nach einem der Ansprüche 1 bis 22, **dadurch gekennzeichnet, dass** sich die Fräswalze (6) im Wesentlichen über die gesamte Arbeitsbreite des Maschinenrahmens (4) erstreckt.

24. Straßenbaumaschine nach einem der Ansprüche 1 bis 23, **dadurch gekennzeichnet, dass** die Fräswalze höhenverstellbar in dem Maschinenrahmen (4) gelagert ist.

25. Straßenbaumaschine nach einem der Ansprüche 1 bis 24, **dadurch gekennzeichnet, dass** die Steuerung (23) aus den erhaltenen Wegmesssignalen die aktuelle Frästiefe berechnet und ein Steuersignal für die Höhenverstellung der Fräswalze (6) erzeugt.

26. Verfahren zum Messen der Frästiefe bei Straßenfräsmaschinen (1), bei denen mit Hilfe einer Fräswalze (6) eine Boden- oder Verkehrsfläche (8) gefräst wird, indem die Straßenfräsmaschine (1) zum Fräsen entsprechend der vorgegebenen Frästiefe mit der Fräswalze (6) abgesenkt wird, bei denen ein Seitenschild (10) auf mindestens einer Seite neben der Frässpur (17) auf der unbearbeiteten Boden- und Verkehrsfläche (8) aufgesetzt wird und bei denen in die von der Fräswalze (6) erzeugte Frässpur (17) ein Abstreifschild (15) abgesenkt wird,
**gekennzeichnet durch**
das Messen der Frästiefe der Frässpur (17) **durch** Erfassen der Messwerte mindestens einer ersten, die Lage der unbearbeiteten Boden- und Verkehrsfläche (8) abtastenden Tasteinrichtung in Relation zu den Messwerten einer die Lage des Grundes der Frässpur (17) abtastenden zweiten Tasteinrichtung oder **durch** Messen der Messwerte beider Tasteinrichtungen in Relation zu dem Maschinenrahmen (4), wobei das Abstreifschild (15) zum Abziehen der gefrästen Oberfläche als zweite Tasteinrichtung verwendet wird.

27. Verfahren nach Anspruch 26, **dadurch gekennzeichnet, dass** die Seitenkanten neben der Frässpur (17) von Seitenschildern (10) niedergehalten werden, dass mindestens eines der Seitenschilder (10) als erste Tasteinrichtung verwendet wird.

28. Verfahren nach Anspruch 26 oder 27, **gekennzeichnet durch** das Korrigieren des gemessenen Frästiefenwertes in Abhängigkeit von dem Abstand zwischen der zweiten Tasteinrichtung und der Drehachse der Fräswalze (6), wenn der Maschinenrahmen (4) der Straßenfräsmaschine nicht parallel zu der Boden- oder Verkehrsfläche (8) verläuft.

## Claims

1. A self-propelling road milling machine (1), particularly a cold-milling machine, comprising
- a track assembly carrying the machine frame (4) via lifting columns (12,13),
- a milling roller (6) supported on the machine frame (4) for treatment of a ground or traffic surface (8),
- height-adjustable side plates (10) for edge protection, arranged to rest on the ground or traffic surface (8) to be treated,
- a height-adjustable stripping means (14) arranged in the moving direction behind the milling roller (6) and adapted to be lowered, during operation, into the milling track (17) generated by the milling roller (6),
- at least one measuring means (16) detects the lifting, caused by the current milling depth, of a first sensor means resting on the ground or traffic surface (8) to be treated, and
- a control means (23) for controlling the milling depth of the milling roller (6),
**characterized in that**
- the measuring means (16) detects the lowering of a second sensor means, consisting of the stripping means (14), onto the surface of the milling track (17), the control means (23) detecting the current exact milling depth of the milling roller (6) from both measurement values of the sensor means relative to the machine frame (4) or relative to each other.

2. The road milling machine of claim 1, **characterized in that** the control means (23) obtains the milling depth of the milling roll (6) at the level of the second sensor means from the measurement values of the at least one measuring means (16).

3. The road milling machine of claim 1, **characterized in that** the control means (23) obtains the current milling depth of the milling roll (6) at the level of the milling roll axis from the measurement values of the at least one measuring means (16).

4. The road milling machine of any one of claims 1 to 3, **characterized in that** the measuring means (16) comprise position-sensing means.

5. The road milling machine of any one of claims 1 to 4, **characterized in that** the first sensor means comprises at least one of the side plates (10) which are arranged on both sides on the end sides of the milling roll (6) in a height-adjustable and pivotable manner relative to the machine frame (4).

6. The road milling machine of any one of claims 1 to 5, **characterized in that** the measuring means (16) comprise cable lines (22), coupled to the first sensor means and/or the second sensor means, and cable-line sensors (21) as position-sensing means.

7. The road milling machine of any one of claims 1 to 6, **characterized in that** the measuring means (16) detect the displacement of the first sensor means relative to the second sensor means, or respectively the displacement of the first sensor means and the second sensor means relative to the machine frame (4).

8. The road milling machine of claim 6 or 7, **characterized in that** a cable line (22) is coupled on the one hand to the stripping means (14) and on the other hand to at least one of the side plates (10) via a deflection roll (35) such that a cable-line sensor (21) directly measures the milling depth.

9. The road milling machine of any one of claims 5 to 8, **characterized in that** the stripping means (14) on the side edges facing towards the side plates (10) comprises respectively one measuring means (16) for measuring the relative displacement of the stripping means (14) relative to at least one side plate (10).

10. The road milling machine of claim 1 or 2, **characterized in that** the stripping means (14) comprises at least one height-adjustable beam (20) which in the stripping direction (14) is guided orthogonally to the lower edge of the stripping means (14), and which extends transversely to the moving direction, said beam serving as a first sensor means, with said beam resting on the ground or traffic surface (8) adjacent to the milling track (17), and with the position of the beam being measurable relative to the stripping means (14), preferably with respect to height and inclination, by the measuring means (16).

11. The road milling machine of any one of claims 5 to 10, **characterized in that**, under the effect of gravity, the side plates (10) rest on the edges adjacent the milling track milled by the milling roll (6).

12. The road milling machine of any one of claims 5 to 11, **characterized in that** hydraulic means are provided to press the side plates (10) onto the edges adjacent to the milling track (9) milled by the milling roll (6) and/or to press the stripping means (14) onto the bottom of the milling track (9).

13. The road milling machine of claim 12, **characterized in that** the hydraulic means comprise piston/cylinder units (26,28) with integrated position-sensing means.

14. The road milling machine of any one of claims 5 to 13, **characterized in that**, for lifting or lowering the side plates (10) and/or the stripping means (14), a plurality, preferably respectively two piston/cylinder units (26,28,30,32) with integrated position-sensing systems are provided, the position-sensing signals of the position-sensing systems relative to the machine frame (4) being used by the control means (23) for computing the current milling depth.

15. The road milling machine of any one of claims 1 to 14, **characterized in that** the control means (23) receiving the position-sensing signals of the measuring means (16) is operative to automatically control the lifting condition of the rear lifting columns (13) in the moving direction for establishing parallelism between the machine frame (4) and the ground or traffic surface (8) or a predetermined milling surface.

16. The road milling machine of claim 15, **characterized in that** the side plates (10) resting on the ground or traffic surface (8) in a pivotable manner relative to the machine frame (4) are provided with two measuring means (16a,16b) arranged at a mutual distance in the moving direction and that the control means (23) is operative to measure, from the difference between the measuring signals of the side plates (10), the longitudinal inclination and/or transverse inclination of the machine frame (4) relative to the ground or traffic surface (8).

17. The road milling machine of any one of claims 1 to 16, **characterized in that** the front and/or rear lifting columns (12,13) are provided with an position-sensing system for detecting the lifting condition.

18. The road milling machine of any one of claims 1 to 17, **characterized in that** the control means (23) receiving the position-sensing signals of the measuring means (16), is operative to control the lifting condition of all lifting columns (12,13) such that the machine frame (4) has a predetermined transverse inclination or a predetermined travel-distance-dependent course of the transverse inclination transversely to the moving direction.

19. The road milling machine of claim 17 or 18, **characterized in that** the current desired value for the milling depth of the milling roll (6) is adjustable by means of the front lifting columns (12).

20. The road milling machine of any one of claims 1 to 19, **characterized in that** the control means (23) receiving the position-sensing signals of all measuring means (18) of the side plates (10) and/or stripping means (14) as well as all lifting columns (12,13), is operative to set, in dependence on the position-sensing signals of the measuring means (16) and/or on the desired position-dependent change of a desired value for the milling depth, the resultant lifting position of the lifting columns (12,13) in the course of the treated length of path.

21. The road milling machine of any one of claims 1 to 20, **characterized in that** the zero level of the measuring signals of the measuring means (16) on the unmilled ground or traffic surface (8) is settable.

22. The road milling machine of any one of claims 1 to 21, **characterized in that** each lifting column (12,13) at its lower end comprises a carrier (11) for a wheel or a caterpillar track assembly, and that a distance sensor (30) is operative to measure the distance of the carrier (11) from the ground or traffic surface (24) and to transmit a measuring signal to a control means (23) for the lifting position of the lifting columns (14) and/or to a control means (23) for the milling depth of the milling roller (6).

23. The road milling machine of any one of claims 1 to 22, **characterized in that** the milling roller (6) extends substantially across the whole working depth of the machine frame (4).

24. The road milling machine of any one of claims 1 to 23, **characterized in that** the milling roller is supported in a height-adjustable manner in the machine frame (4).

25. The road milling machine of any one of claims 1 to 24, **characterized in that** the control means (23) obtains the current milling depth from the received position-sensing signals and generates a control signal for the height adjustment of the milling roll (6).

26. A method for measuring the milling depth in road milling machines (1) which are operative to mill a ground or traffic surface (8) by means of a milling roll (6) in that, for milling, the road milling machine (1) with the milling roll (6) is lowered corresponding to the predetermined milling depth, in which road milling machines a side plate (10) will at least on one side be placed adjacent the milling track (17) onto the untreated ground or traffic surface (8), and a stripping plate (15) will be lowered into the milling track (17) generated by the milling roll (6),
**characterized by**
measuring the milling depth of the milling track (17) by detecting the measurement values of at least one first sensor means sensing the position of the untreated ground or traffic surface (8) in relation to the measurement values of a second sensor means sensing the position of the ground of the milling track (17), or by measuring the measurement values of both sensor means in relation to the machine frame (4), the stripping plate (15) for stripping the milled surface being used as said second sensor means.

27. The method according to claim 26, **characterized in that** the side edges adjacent to the milling track (17) are held down by means of side plates (10) and that at least one of the side plates (10) is used as said first sensor means.

28. The method according to claim 26 or 27, **characterized by** correcting the measured milling-depth value in dependence on the distance between said second senor means and the rotational axis of the milling roller (6) when the machine frame (4) of the road milling machine does not extend parallel to the ground or traffic surface (8).

## Revendications

1. Machine de construction de routes (1) autotractée, en particulier fraise à froid, avec
- un châssis qui porte le cadre de machine (4) via des colonnes de levage (12,13),
- un tambour de fraisage (6) supporté sur le cadre de machine (4) pour l'usinage d'une surface de sol ou de circulation (8),
- des plaques latérales (10) réglables en hauteur en tant que protection d'arêtes qui reposent sur la surface de sol ou de circulation (8) à usiner,
- un dispositif de raclage (14) réglable en hauteur qui est disposé derrière le tambour de fraisage (6) dans le sens de la marche et qui, pendant le fonctionnement, peut être abaissé dans la gorge de fraisage (17) produite par le tambour de fraisage (6),
- au moins un dispositif de mesure (16) qui détecte le relèvement, qui survient du fait de la profondeur de fraisage actuelle, d'un premier dispositif palpeur reposant sur la surface de sol ou de circulation (8) à usiner, et
- un dispositif de commande (23) destiné à commander la profondeur de fraisage du tambour de fraisage (6),
**caractérisée en ce que**
le dispositif de mesure (16) détecte l'abaissement d'un deuxième dispositif palpeur composé du dispositif de raclage (14) sur la surface de la gorge de fraisage (17), la commande (23) déterminant la profondeur de fraisage précise actuelle du tambour de fraisage (6) à partir de deux valeurs de mesure des dispositifs palpeurs par rapport au cadre de machine (4) ou l'un par rapport à l'autre.

2. Machine de construction de routes selon la revendication 1, **caractérisée en ce que**, à partir des valeurs de mesure du dispositif de mesure (16) au moins au nombre de un, la commande (23) détermine la profondeur de fraisage du tambour de fraisage (6) à la hauteur du deuxième dispositif palpeur.

3. Machine de construction de routes selon la revendication 1, **caractérisée en ce que**, à partir des valeurs de mesure du dispositif de mesure (16) au moins au nombre de un, la commande (23) calcule la profondeur de fraisage actuelle du tambour de fraisage (6) à la hauteur de l'axe du tambour de fraisage.

4. Machine de construction de routes selon les revendications 1 à 3, **caractérisée en ce que** les dispositifs de mesure (16) sont composés de dispositifs de mesure de course.

5. Machine de construction de routes selon les revendications 1 à 4, **caractérisée en ce que** le premier dispositif palpeur se compose d'au moins une des plaques latérales (10) disposées des deux côtés sur les côtés frontaux du tambour de fraisage (6) de façon réglable en hauteur et pivotante par rapport au cadre de machine (4).

6. Machine de construction de routes selon les revendications 1 à 5, **caractérisée en ce que** les dispositifs de mesure (16) présentent, en tant que dispositifs de mesure de course, des tirettes à câble (22) et des capteurs à tirette à câble (21) couplés au premier dispositif palpeur ou au deuxième dispositif palpeur.

7. Machine de construction de routes selon les revendications 1 à 6, **caractérisée en ce que** les dispositifs de mesure (16) détectent le déplacement du premier dispositif palpeur par rapport au deuxième dispositif palpeur ou respectivement le déplacement du premier et du deuxième dispositif palpeur par rapport au cadre de machine (4).

8. Machine de construction de routes selon la revendication 6 ou 7, **caractérisée en ce qu'**une tirette à câble (22) est couplée d'une part au dispositif de raclage (14) et d'autre part à au moins une des plaques latérales (10) par le biais d'une poulie de renvoi (35) de telle sorte qu'un capteur à tirette à câble (21) mesure directement la profondeur de fraisage.

9. Machine de construction de routes selon les revendications 5 à 8, **caractérisée en ce que**, sur les arêtes latérales tournées vers les plaques latérales (10), le dispositif de raclage (14) présente respectivement un dispositif de mesure (16) qui mesure le déplacement relatif du dispositif de raclage (14) par rapport à la plaque latérale (10) au moins au nombre de un.

10. Machine de construction de routes selon une des revendications 1 ou 2, **caractérisée en ce que** le dispositif de raclage (14) présente au moins, en tant que premier dispositif palpeur, une poutre (20) réglable en hauteur, guidée linéairement dans le dispositif de raclage (14) à angle droit par rapport à l'arête inférieure du dispositif de raclage (14), s'étendant transversalement au sens de la marche, qui repose à côté de la gorge de fraisage (17) sur la surface de sol ou de circulation (8) et dont la position par rapport au dispositif de raclage (14), de préférence en ce qui concerne la hauteur et l'inclinaison, peut être mesurée par le dispositif de mesure (16).

11. Machine de construction de routes selon une des revendications 5 à 10, **caractérisée en ce que**, du fait de la gravité, les plaques latérales (10) reposent sur les arêtes près de la gorge de fraisage fraisée par le tambour de fraisage (6).

12. Machine de construction de routes selon une des revendications 5 à 11, **caractérisée en ce que** des dispositifs hydrauliques pressent les plaques latérales (10) sur les arêtes près de la gorge de fraisage (9) fraisée par le tambour de fraisage (6) et/ou pressent le dispositif de raclage (14) sur le sol de la gorge de fraisage (9).

13. Machine de construction de routes selon la revendication 12, **caractérisée en ce que** les dispositifs hydrauliques se composent d'unités piston-cylindre (26, 28) avec système de mesure de course intégré.

14. Machine de construction de routes selon une des revendications 5 à 13, **caractérisée en ce que**, pour le relèvement ou l'abaissement des plaques latérales (10) et/ou du dispositif de raclage (14), il est prévu plusieurs, de préférence respectivement deux, unités piston-cylindre (26, 28, 30, 32) avec système de mesure de course intégré, à partir des signaux de mesure de course desquelles, en relation avec le cadre de machine (4), la commande (23) calcule la profondeur de fraisage actuelle.

15. Machine de construction de routes selon une des revendications 1 à 14, **caractérisée en ce que** la commande (23), qui reçoit les signaux de mesure de course des dispositifs de mesure (16), règle automatiquement l'état de levage des colonnes de levage (13) arrière dans le sens de la marche pour la réalisation du parallélisme du cadre de machine (4) par rapport à la surface de sol ou de circulation (8) ou par rapport à un plan de fraisage prédéfini.

16. Machine de construction de routes selon la revendication 15, **caractérisée en ce que** les plaques latérales (10) reposant sur la surface de sol ou de circulation (8) de façon pivotante par rapport au cadre de machine (4) présentent deux dispositifs de mesure (16a, 16b) disposés dans le sens de la marche à distance l'un de l'autre, et **en ce que**, à partir de la différence des signaux de mesure desdites plaques latérales (10), la commande (23) mesure l'inclinaison longitudinale et/ou l'inclinaison transversale du cadre de machine (4) par rapport à la surface de sol ou de circulation (8).

17. Machine de construction de routes selon les revendications 1 à 16, **caractérisée en ce que** les colonnes de levage (12,13) avant et/ou arrière présentent un système de mesure de course pour la détection de l'état de levage.

18. Machine de construction de routes selon une des revendications 1 à 17, **caractérisée en ce que** la commande (23) qui reçoit les signaux de mesure de course des dispositifs de mesure (16) règle l'état de levage de toutes les colonnes de levage (12,13) de telle sorte que le cadre de machine (4) présente, transversalement au sens de la marche, une inclinaison transversale prédéfinie ou une courbe d'inclinaison transversale prédéfinie qui est fonction du trajet de la course.

19. Machine de construction de routes selon la revendication 17 ou 18, **caractérisée en ce que** la valeur de consigne actuelle pour la profondeur de fraisage du tambour de fraisage (6) peut être réglée à l'aide des colonnes de levage (12) avant.

20. Machine de construction de routes selon une des revendications 1 à 19, **caractérisée en ce que** la commande (23) qui reçoit les signaux de mesure de de tous les dispositifs de mesure (18) des plaques latérales (10) et/ou des dispositifs de raclage (14), ainsi que de toutes les colonnes de levage (12,13), ajuste, en fonction des signaux de mesure de course des dispositifs de mesure (16) et/ou de la variation souhaitée, selon le lieu, d'une valeur de consigne pour la profondeur de fraisage au cours du trajet de course usiné, la position de levage des colonnes de levage (12,13) qui en résulte.

21. Machine de construction de routes selon une des revendications 1 à 20, **caractérisée en ce que** le niveau zéro des signaux de mesure des dispositifs de mesure (16) sur la surface de sol ou de circulation (8) non fraisée est réglable.

22. Machine de construction de routes selon une des revendications 1 à 21, **caractérisée en ce que** chaque colonne de levage (12,13) présente, à l'extrémité inférieure, un support (11) pour une roue ou un train à chenilles, et **en ce qu'**un capteur de distance (30) mesure la distance entre le support (11) et la surface de sol ou de circulation (24) et envoie un signal de mesure à une commande (23) pour la position de levage des colonnes de levage (14) et/ou à une commande (23) pour la profondeur de fraisage du tambour de fraisage (6).

23. Machine de construction de routes selon une des revendications 1 à 22, **caractérisée en ce que** le tambour de fraisage (6) s'étend essentiellement sur toute la largeur de travail du cadre de machine (4).

24. Machine de construction de routes selon une des revendications 1 à 23, **caractérisée en ce que** le tambour de fraisage est supporté de façon réglable en hauteur dans le cadre de machine (4).

25. Machine de construction de routes selon une des revendications 1 à 24, **caractérisée en ce que** la commande (23) calcule la profondeur de fraisage actuelle à partir des signaux de mesure de course reçus et produit un signal de commande pour le réglage en hauteur du tambour de fraisage (6).

26. Procédé de mesure de la profondeur de fraisage sur des machines de fraisage de routes (1), avec lesquelles une surface de sol ou de circulation (8) est fraisée à l'aide d'un tambour de fraisage (6) par le fait que, pour le fraisage, la machine de fraisage de routes (1) est abaissée avec le tambour de fraisage (6) de façon correspondante à la profondeur de fraisage prédéfinie, avec lesquelles une plaque latérale (10) est, sur au moins un côté près de la gorge de fraisage (17), placée sur la surface de sol ou de circulation (8) non usinée et avec lesquelles une plaque racleuse (15) est abaissée dans la gorge de fraisage (17) produite par le tambour de fraisage (6),
**caractérisé par**
la mesure de la profondeur de fraisage de la gorge de fraisage (17) par la détection des valeurs de mesure d'au moins un premier dispositif palpeur qui palpe l'emplacement de la surface de sol ou de circulation (8) non usinée en relation avec les valeurs de mesure d'un deuxième dispositif palpeur palpant l'emplacement du fond de la gorge de fraisage (17), ou par la mesure des valeurs de mesure des deux dispositifs palpeurs en relation avec le cadre de machine (4), la plaque racleuse (15) étant utilisée pour l'enlèvement de la surface fraisée en tant que deuxième dispositif palpeur.

27. Procédé selon la revendication 26, **caractérisé en ce que** les arêtes latérales près de la gorge de fraisage (17) sont maintenues vers le bas par des plaques latérales (10), **en ce qu'**au moins une des plaques latérales (10) est utilisée en tant que premier dispositif palpeur.

28. Procédé selon la revendication 26 ou 27, **caractérisé par** la correction de la valeur mesurée de profondeur de fraisage en fonction de la distance entre le deuxième dispositif palpeur et l'axe de rotation du tambour de fraisage (6) quand le cadre de machine (4) de la machine de fraisage de routes n'est pas parallèle à la surface de sol ou de circulation (8).
